(19) Europäisches Patentamt
European Patent Office
Office européen des brevets

(11) **EP 0 762 105 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(51) Int Cl.[7]: **G01N 1/22**

(21) Anmeldenummer: **96112909.5**

(22) Anmeldetag: **10.08.1996**

(54) **Dosiervorrichtung zur Entnahme von Gasen aus einem Druckbehälter**

Metering device for withdrawing gases from a pressure vessel

Dispositif doseur pour le prélèvement des gaz dans un récipient sous pression

(84) Benannte Vertragsstaaten:
**DE FR GB IT**

(30) Priorität: **26.08.1995 DE 19531505**

(43) Veröffentlichungstag der Anmeldung:
**12.03.1997 Patentblatt 1997/11**

(73) Patentinhaber: **Messer Griesheim GmbH 65933 Frankfurt am Main (DE)**

(72) Erfinder:
• **Eschwey, Manfred, Dr.
40489 Düsseldorf (DE)**
• **Pulvermacher, Erika
59192 Bergkamen (DE)**

(56) Entgegenhaltungen:
DE-A- 4 308 191    US-A- 3 760 831
US-A- 4 040 936    US-A- 5 419 177

**Beschreibung**

Die Erfindung betrifft eine Dosiervorrichtung zur Entnahme von Gasen aus einem Druckbehälter.

Nach dem Stand der Technik werden sowohl Inertgase als auch reaktive Gase über Metallventile aus Druckbehältern entnommen. Es handelt sich hierbei um Grobventile, denen feinere Nadelventile nachgeordnet sind.

Die kontaminationsfreie Probenahme für Gase beziehungsweise die Dosierung von Kalibriergasgemischen stellt insbesondere bei reaktiven und korrosiven Gasen oder Gasgemischen oftmals ein entscheidendes Problem im Bereich der gesamten Meß- und Prüftechnik dar; aber auch in vielen anderen Bereichen, wie der Halbleiterfertigung oder bei der Herstellung von Lichtleitfasem spielen die eingesetzten Gaseversorgungssysteme eine entscheidende Rolle: Durch Wechselwirkung der Oberfläche mit korrosiven Medien entstehen zum Beispiel neben Wasser mobile Metallhalogenverbindungen, die aufgrund ihres hohen Dampfdruckes und ihres Aerosolcharakters auch hochwirksame Filtersysteme überwinden können.

Als Werkstoffe stehen mit den neuen sogenannten Ingenieurkunststoffen, wie Polyethersulfone, Polyimide, diverse Fluorpolymere und Keramiken oder beschichtetem Quarz, Materialien zur Verfügung, die hinsichtlich der Härte, Festigkeit und Korrosionsbeständigkeit mittlerweile die meisten Anforderungen erfüllen. Aus prozeßtechnischer und sicherheitstechnischer Sicht müssen Meß- und Regelorgane zur Druckmessung und Druckregelung, Durchflußmesser, Durchflußregler, Regel- und Absperrventile sowie Sicherheitsventile usw. in ein Dosiersystem für Gase integriert werden. Insbesondere bei kleinen Nennweiten und hohen Nenndrücken sind derartige Komponenten insbesondere für aggressive Gase aus nichtmetallischen, nichtkorrosiven Werkstoffen bis heute nicht in den Anforderungen entsprechender Qualität verfügbar.

Im Dokument US 5 419 177 wird eine Nadel zur Strömungsbegrenzung verwender. Die Druckreduzierung findet mittels eines üblichen Druckreduzierungsventils statt.

Der Erfindung liegt daher die Aufgabe zugrunde, eine Dosiervorrichtung zu schaffen, mit der auf einfache Weise eine Dosierung vorgenommen werden kann, die mit einer geringen Anzahl an Einzelteilen auskommt. Insbesondere soll das Problem der Kontamination des Gases mit Bestandteilen, die aus dem Werkstoff austreten oder durch Reaktion des Gases mit dem Werkstoff entstehen, vermieden werden. Es soll dabei seine sehr genaue Dosierung möglich sein.

Ausgehend von dem im Oberbegriff des Anspruchs 1 berücksichtigten Stand der Technik ist die Aufgabe erfindungsgemäß gelöst mit den im kennzeichnenden Teil des Anspruchs 1 angegebenen Merkmalen.

Mit der erfindungsgemäßen Vorrichtung ist es nunmehr möglich, auf kostengünstige Art und Weise insbesondere aggressive Gase kontaminationsfrei aus Druckbehältern zu entnehmen. Eine Entnahme von Gas ist sehr fein dosiert vorzunehmen.

Vorteilhafte Weiterbildungen sind in den Unteransprüchen angegeben.

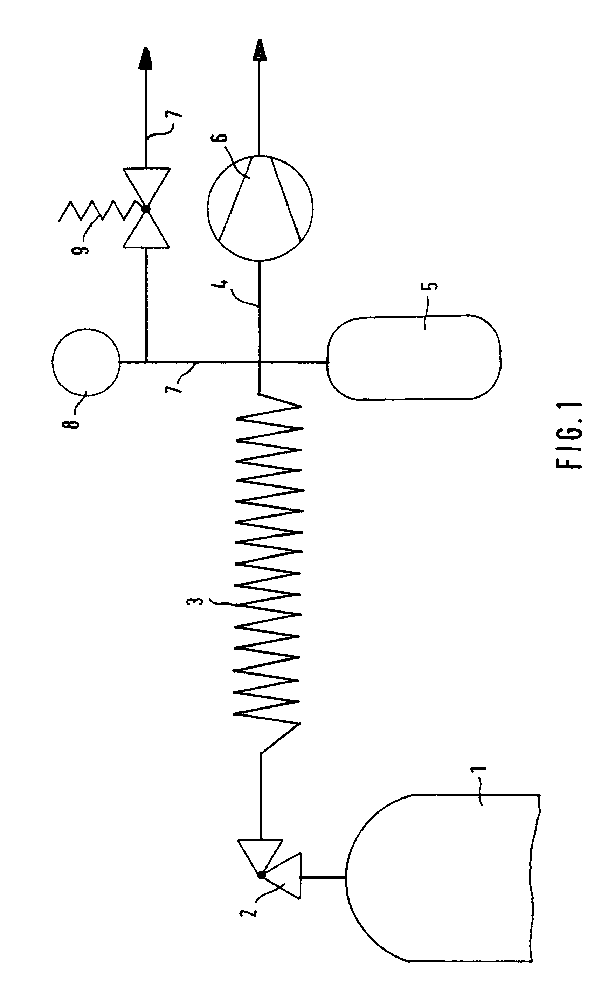

Figur 1 veranschaulicht eine Vorrichtung in schematischer Form.

In ihr ist ein Druckbehälter 1 mit einem Flaschenhalsventil 2 dargestellt, an welches eine Kapillare 3 angebracht ist. Die Kapillare 3 mündet in eine Leitung 4, an die ein Pufferbehälter 5 und eine Pumpe 6 angeschlossen sind. An dem Pufferbehälter 5 befindet sich eine Ausgangsleitung 7 die mit einem Druckmeßgerät 8 ausgestattet ist und an der sich ein Überdruckventil 9 befindet.

Bei der Entnahme von korrosivem Gas aus dem Druckbehälter 1 wird das Flaschenhalsventil 2, welches aus nicht korrosivem Material, in diesem Fall Tantal, besteht, geöffnet. Es strömt durch die Kapillare 3, welche aus nichtkorrosivem Quarz besteht. Hierbei findet eine Druckreduzierung statt die vom Querschnitt und der Länge der Kapillare 3 abhängt. Die Druckreduzierung erfolgt dabei nach dem Hagen Poiseuille' schen Gesetz nach dem der Volumenstrom berechnet werden kann.

$$\frac{dV}{dt} \quad \frac{\pi \times r^4 \times \Delta p}{8 \times l \times \eta}$$

mit:

    dV/dt = Volumenstrom
    r = Kapillardurchmesser
    l = Kapillarlänge
    $\Delta p$ = Druckerlust
    $\eta$ = dynamische Viskosität

Durch Variation der Länge und/oder des Querschnittes des Innendurchmessers der Kapillare 3 läßt sich eine hochgenaue Mengendosierung oder eine hochpräzise Einstellung des Hinterdruckes der Kapillare 3 vornehmen. Ist ein freies Abströmen der benötigten Gasmenge nicht möglich, so erfolgt die Einstellung eines konstanten Volumenstromes nach der Druckreduzierung durch die Pumpe 6, die eine hochgenaue Dosierung der benötigten Gasmenge auch gegen einen sich ändernden Druck im Rezipienten ermöglicht. Hierbei gelangt das Gas vorübergehend in den Pufferbehälter 5, an den die peristaltische Pumpe sowie das Druckmeßgerät 7 angeschlossen sind. Wird ein bestimmter Druck überschritten, so öffnet sich das Überdruckventil 9.

Als Material für die Kapillare 3 kommen insbesondere Quarz, Keramik, und Kunststoffe, wie Polyethersulfone, Polyimide, Polyetherketone und diverse Fluorpolymere, die vorzugsweise durch Glasfasern verstärkt sind, in Frage. Natürlich ist auch jedes andere nichtkorrosive Material geeignet, das den Anforderungen an Dichtigkeit gerecht wird. Vorzugsweise werden alle Bestandteile der Vorrichtung aus nicht korrosivem Material bestehen oder damit ausgekleidet sein. Es ist auch möglich eine Kapillare 3 aus anderen, korrosiven Materialien einzusetzen, wenn durch die Vorrichtung lediglich Kosten bei der Dosierung von nichtkorrosiven Gasen, wie Stickstoff, eingespart werden sollen. Zusätzlich bietet diese Lösung eine Reihe weiterer ökonomischer und sicherheitstechnischer Vorteile: So kann die üblicherweise notwendige, störanfällige Druck- und Mengenregelung des Gasstromes mittels Membrandruckregler und Massedurchflußregler entfallen; die bei metallischen Systemen notwendige, aufwendige Verbindungstechnik entfällt ebenso und die zu entsorgenden Gasmengen des kleinen Totvolumens sind äußerst gering. Der apparative Aufwand ist gering.

**Patentansprüche**

1. Dosiervorrichung für die Entnahme von Gasen aus einem Druckbehälter (1) mit einem Flaschenhalsventil (2),
   **dadurch gekennzeichnet,**
   **dass** die Dosiervorrichtung eine Kapillare (3) zur Druckreduzierung umfasst und die Kapillare (3) an dem Flaschenhalsventil (2) angebracht ist .

2. Dosiervorrichtung nach Anspruch 1
   **dadurch gekennzeichnet,**
   **dass** die Kapillare (3) aus nicht korrosivem Material besteht.

3. Dosiervorrichtung nach Anspruch 1 oder 2,
   **dadurch gekennzeichnet,**
   **dass** die Kapillare (3) aus mindestens einer Komponente der Werkstoffe Kunststoff, Keramik und Quarz besteht.

4. Dosiervorrichtung nach Anspruch 3,
   **dadurch gekennzeichnet,**
   **dass** der Kunststoff mindestens eine Komponente aus der Gruppe Polyethersulfon, Polyetherketon, Polyimid und Fluorpolymer ist.

5. Dosiervorrichtung nach einem der Ansprüche 1 bis 4,
   **dadurch gekennzeichnet,**
   **dass** an die Kapillare (3) ein Pufferbehälter (5) mit einem Druckmessgerät (8) sowie eine Pumpe (6) angeschlossen ist.

6. Dosiervorrichtung nach Anspruch 5,
   **dadurch gekennzeichnet,**
   **dass** die Pumpe (6) eine peristaltische Pumpe ist.

7. Verfahren zur Druckreduzierung bei der Entnahme von Gasen aus einem Druckbehälter (1) mit einem Flaschenhalsventil (2),
   **dadurch gekennzeichnet,**
   **dass** durch Variation der Länge und/oder des Querschnittes des Innendurchmessers einer Kapillare (3), die an dem Flaschenhalsventil (2) angebracht ist, die Mengendosierung des Gases oder die Einstellung des Hinterdruckes vorgenommen wird.

**Claims**

1. Metering device for the removal of gases from a pressure vessel (1) having a bottleneck valve (2), **characterized in that** the metering device comprises a capillary (3) for pressure reduction and the capillary (3) is fitted to the bottleneck valve (2).

2. Metering device according to Claim 1, **characterized in that** the capillary (3) consists of noncorrosive material.

3. Metering device according to Claim 1 or 2, **characterized in that** the capillary (3) consists of at least one component selected from the materials plastic, ceramic and quartz.

4. Metering device according to Claim 3, **characterized in that** the plastic is at least one component selected from the group consisting of polyethersulphone, polyether ketone, polyimide and fluoropolymer.

5. Metering device according to one of Claims 1 to 4, **characterized in that** a buffer vessel (5) with a pressure-measuring unit (8) and a pump (6) are connected to the capillary (3).

6. Metering device according to Claim 5, **characterized in that** the pump (6) is a peristaltic pump.

7. Method for reducing the pressure during the removal of gases from a pressure vessel (1) having a bottleneck valve (2), **characterized in that** the quantitative metering of the gas or the setting of the backpressure is effected by varying the length and/or the cross section of the internal diameter of a capillary (3) which is fitted to the bottleneck valve (2).

**Revendications**

1. Dispositif de dosage pour le prélèvement de gaz d'un réservoir sous pression (1) comportant un robinet (2) de goulot de bouteille,
   **caractérisé en ce que**
   le dispositif de dosage comprend un tube capillaire (3) pour la réduction de la pression et le tube capillaire (3) est monté sur le robinet (2) de goulot de bouteille.

2. Dispositif de dosage selon la revendication 1, **caractérisé en ce que** le tube capillaire (3) est constitué de matériau non corrosif.

3. Dispositif de dosage selon la revendication 1 ou 2, **caractérisé en ce que** le tube capillaire (3) est constitué d'au moins un composant des matériaux matière plastique, céramique et quartz.

4. Dispositif de dosage selon la revendication 3, **caractérisé en ce que** la matière plastique est au moins un composant provenant du groupe polyéthersulfone, polyéthercétone, polyimide et polymère fluoré.

5. Dispositif de dosage selon l'une des revendications 1 à 4, **caractérisé en ce qu'** un réservoir tampon (5) avec un appareil de mesure de la pression (8) ainsi qu'une pompe (6) sont raccordés au tube capillaire (3).

6. Dispositif de dosage selon la revendication 5, **caractérisé en ce que** la pompe (6) est une pompe péristaltique.

7. Procédé de réduction de la pression pour le prélèvement de gaz d'un réservoir sous pression (1) comportant un robinet (2) de goulot de bouteille, **caractérisé en ce que** le dosage quantitatif du gaz ou le réglage de la pression secondaire est effectué par variation de la longueur et/ou de la section du diamètre interne d'un tube capillaire (3) qui est monté sur le robinet (2) de goulot de bouteille.

FIG.1